# EUROPEAN PATENT APPLICATION

(11) **EP 4 422 143 A1**
(43) Date of publication of application: **28.08.2024**
(21) Application number: 22882724.2
(22) Date of filing: 12.10.2022
(51) Int. Cl.: H04L 45/00, H04W 28/02, H04W 28/06

(54) **DATA PROCESSING METHOD AND APPARATUS, AND TERMINAL**

(30) Priority: 19.10.2021 CN 202111216441
(71) Applicant: Vivo Mobile Communication Co., Ltd., Dongguan, Guangdong 523863 (CN)
(72) Inventor: CHEN, Li, Dongguan, Guangdong 523863 (CN); LI, Dongru, Dongguan, Guangdong 523863 (CN); SUN, Xiaodong, Dongguan, Guangdong 523863 (CN)
(74) Representative: Lavoix
(86) International application number: PCT/CN2022/124914
(87) International publication number: WO 2023/066114

(57) **Abstract**

This application discloses a data processing method and apparatus and a terminal. The method in this application includes: in a case that a first timer expires, discarding, by a terminal, at least one of the following: a first data packet, a first data group, a second data packet, or a data group in which the second data packet is located, where the first data packet is at least one data packet in the first data group, and the second data packet includes at least one of the following: at least one data packet associated with the first data packet or the first data group; at least one data packet in a second data group, where the second data group is associated with the first data group or the first data packet; at least one data packet in a third data group, where the third data group is a data group in which a third data packet is located, and the third data packet is a data packet associated with the first data packet or the first data group; a data packet associated with the first timer; and at least one data packet in a data group associated with the first time.

## Description

### CROSS-REFERENCE TO RELATED APPLICATIONS

This application claims priority to Chinese Patent Application No. 202111216441.1, filed on October 19, 2021 in China, which is incorporated herein by reference in its entirety.

### TECHNICAL FIELD

The present invention relates to the field of communication technologies, and in particular, to a data processing method and apparatus and a terminal.

### BACKGROUND

In a related solution, a discard timer (timer) of each service data unit (Service Data Unit, SDU) of a packet data convergence protocol (Packet Data Convergence Protocol, PDCP) is independent and has no relationship with each other. In a case that there is a strong association between different data packets of a service, design of an existing independent discard timer may cause some invalid data transmission, thereby wasting system resources or increasing a transmission delay of some data.

### SUMMARY

Embodiments of this application provide a data processing method and apparatus and a terminal, which can resolve a problem that design of an existing independent discard timer causes some invalid data transmission.

According to a first aspect, a data processing method is provided, including:
in a case that a first timer expires, discarding, by a terminal, at least one of the following: a first data packet, a first data group, a second data packet, or a data group in which the second data packet is located;
where
the second data packet includes at least one of the following:
   at least one data packet associated with the first data packet or the first data group;
   at least one data packet in a second data group, where the second data group is associated with the first data group or the first data packet;
   at least one data packet in a third data group, where the third data group is a data group in which a third data packet is located, and the third data packet is a data packet associated with the first data packet or the first data group;
   a data packet associated with the first timer; and
   at least one data packet in a data group associated with the first timer; where
   the first timer is a timer associated with at least one of the first data packet, the first data group, the second data packet, or the data group in which the second data packet is located.

According to a second aspect, a data processing apparatus is provided, including:
a first processing module, configured to: in a case that a first timer expires, discard at least one of the following:
a first data packet, a first data group, a second data packet, or a data group in which the second data packet is located;
where
the second data packet includes at least one of the following:
   at least one data packet associated with the first data packet or the first data group;
   at least one data packet in a second data group, where the second data group is associated with the first data group or the first data packet;
   at least one data packet in a third data group, where the third data group is a data group in which a third data packet is located, and the third data packet is a data packet associated with the first data packet or the first data group;
   a data packet associated with the first timer; and
   at least one data packet in a data group associated with the first timer; where
   the first timer is a timer associated with at least one of the first data packet, the first data group, the second data packet, or the data group in which the second data packet is located.

According to a third aspect, a terminal is provided, where the terminal includes a processor, a memory, and a program or an instruction that is stored in the memory and that can run on the processor, and when the program or the instruction is executed by the processor, the steps of the method according to the first aspect are implemented.

According to a fourth aspect, a terminal is provided, including a processor and a communication interface, where the processor is configured to: in a case that a first timer expires, discard at least one of the following: a first data packet, a first data group, a second data packet, or a data group in which the second data packet is located;
where
the second data packet includes at least one of the following:
at least one data packet associated with the first data packet or the first data group;
at least one data packet in a second data group, where the second data group is associated with the first data group or the first data packet;
at least one data packet in a third data group, where the third data group is a data group in which a third data packet is located, and the third data packet is a data packet associated with the first data packet or the first data group;
a data packet associated with the first timer; and
at least one data packet in a data group associated with the first timer; where
the first timer is a timer associated with at least one of the first data packet, the first data group, the second data packet, or the data group in which the second data packet is located.

According to a fifth aspect, a readable storage medium is provided, where the readable storage medium stores a program or an instruction, and when the program or the instruction is executed by a processor, the steps of the method according to the first aspect are implemented.

According to a sixth aspect, a chip is provided, where the chip includes a processor and a communication interface, where the communication interface is coupled to the processor, and the processor is configured to run a program or an instruction to implement the method according to the first aspect.

According to a seventh aspect, a computer program/program product is provided, where the computer program/program product is stored in a non-volatile storage medium, and the computer program/program product is executed by at least one processor to implement the steps of the method according to the first aspect.

In the embodiments of this application, in a case that a first timer expires, a terminal discards at least one of the following: a first data packet, a first data group, a second data packet, or a data group in which the second data packet is located. The first timer is a timer associated with at least one of the first data packet, the first data group, the second data packet, or the data group in which the second data packet is located. In this way, in a case that the first timer expires, an associated data packet or data group is discarded, so that transmission of invalid data can be reduced, and resource utilization of a system can be improved, or a transmission delay of a data packet can be reduced.

### BRIEF DESCRIPTION OF DRAWINGS

FIG. 1 is a structural diagram of a communication system to which embodiments of this application can be applied;
FIG. 2 is a schematic flowchart of a data processing method according to an embodiment of this application;
FIG. 3 is a schematic diagram of modules of a data processing apparatus according to an embodiment of this application;
FIG. 4 is a structural block diagram of a communication device according to an embodiment of this application; and
FIG. 5 is a structural block diagram of a terminal according to an embodiment of this application.

### DESCRIPTION OF EMBODIMENTS

The terms "first", "second", and the like in this specification and claims of this application are used to distinguish between similar objects instead of describing a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, in the description and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6th generation (6th Generation, 6G) communication system.

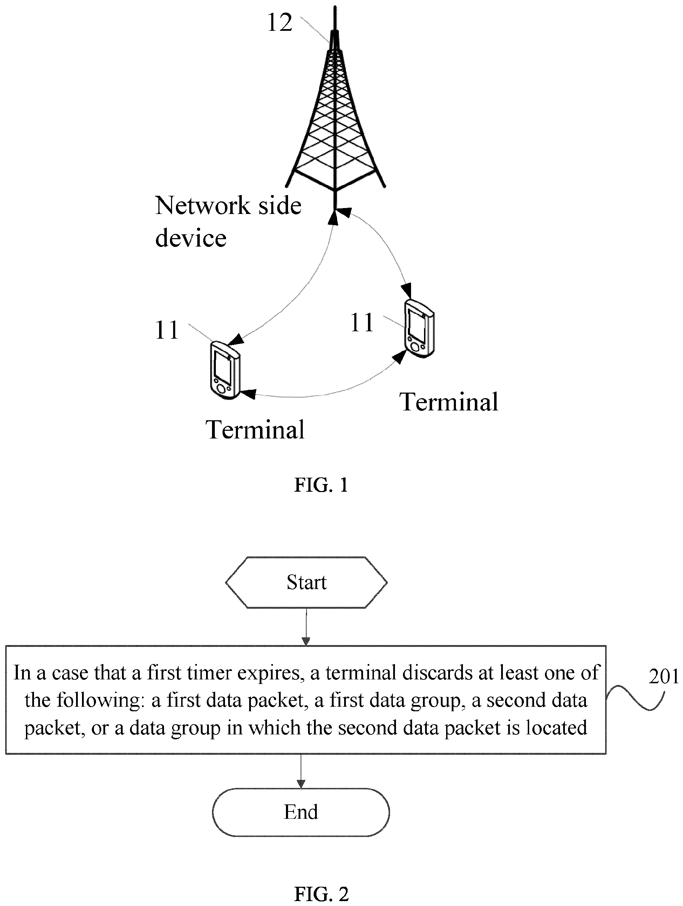

FIG. 1 is a structural diagram of a wireless communication system to which embodiments of this application can be applied. The wireless communication system includes a terminal 11 and a network side device 12. The terminal 11 may also be referred to as a terminal device or user equipment (User Equipment, UE). The terminal 11 may be a terminal device such as a mobile phone, a tablet personal computer (Tablet Personal Computer), a laptop computer (Laptop Computer) that is alternatively referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), personal user equipment (Personal User Equipment, PUE), or a smart home device (a home device with a wireless communications function, such as a refrigerator, a television, a washing machine, or a furniture). The wearable device includes a smart watch, a smart band, a smart headset, smart glasses, smart jewelry (a smart bracelet, a smart ring, a smart necklace, or a smart chain), a smart wrist strap, a smart dress, a game machine, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Network, WLAN) access point, a Wi-Fi node, a transmitting receiving point (Transmitting Receiving Point, TRP), or another appropriate term in the art. Provided that same technical effect is achieved, the base station is not limited to a specified technical term. It should be noted that, in the embodiments of this application, only a base station in an NR system is used as an example, but a specific type of the base station is not limited.

A data processing method provided in the embodiments of this application is described in detail below with reference to the accompanying drawings by using specific embodiments and application scenarios thereof.

As shown in FIG. 2, an embodiment of this application provides a data processing method. The data processing method includes the following step:

Step 201: In a case that a first timer expires, a terminal discards at least one of the following: a first data packet, a first data group, a second data packet, or a data group in which the second data packet is located.

The first data packet is at least one data packet in the first data group. The first data group is a data group associated with the first timer; or the first data group is a data group that includes the first data packet, and the first data packet is a data packet associated with the first timer.

The second data packet includes at least one of the following:
at least one data packet associated with the first data packet or the first data group;
at least one data packet in a second data group, where the second data group is associated with the first data group or the first data packet;
at least one data packet in a third data group, where the third data group is a data group in which a third data packet is located, and the third data packet is a data packet associated with the first data packet or the first data group;
a data packet associated with the first timer; and
at least one data packet in a data group associated with the first timer; where
the first timer is a timer associated with at least one of the first data packet, the first data group, the second data packet, or the data group in which the second data packet is located.

The first timer may be specifically a discard timer. In this embodiment of this application, associated data packets or data groups may be data packets or data groups whose coding/decoding information is correlated in an extended reality (Extended Reality, XR) or cloud game (Cloud Game, CG) service, for example, may be an I frame (or an IDR frame) and a P frame in the XR or CG service. The associated data packets may be alternatively a field of view (Field of view, Fov) frame and a non-Fov frame, a voice data packet and a video image data packet, data packets of different priorities, or a data packet corresponding to a base layer and a data packet corresponding to an enhancement layer.

In some embodiments, a first operation of one of the data packet associated with the first data packet and the first data packet depends on the other, and the first operation includes at least one of the following: transmission, decoding, demodulation, reception, display, and integrity verification. One of the data packet associated with the first data packet and the first data packet may be the first data packet, a data packet in the first data group, the first data group, or the data group in which the first data packet is located, and the other may be the second data packet, a data packet in the second data group, the second data group, or the data group in which the second data packet is located.

According to the data processing method in this embodiment of this application, in a case that a first timer expires, a terminal discards at least one of the following: a first data packet, a first data group, a second data packet, or a data group in which the second data packet is located. The first timer is a timer associated with at least one of the first data packet, the first data group, the second data packet, or the data group in which the second data packet is located. In this way, in a case that the first timer expires, an associated data packet or data group is discarded, so that transmission of invalid data can be reduced, and resource utilization of a system can be improved, or a transmission delay of a data packet can be reduced.

Optionally, the data packet associated with the first timer includes at least one of the following:
a fourth data packet, where the fourth data packet is some or all data packets corresponding to the first timer;
a fifth data packet, where the fifth data packet is some or all data packets associated with the fourth data packet;
a sixth data packet, where the sixth data packet is at least one data packet in a fourth data group, and the fourth data group is at least one data group corresponding to the timer; and
a seventh data packet, where the seventh data packet is at least one data packet in a fifth data group, and the fifth data group is a data group associated with the fourth data group.

Optionally, the data group associated with the first timer includes at least one of the following:
a sixth data group, where the sixth data group is all or some data groups corresponding to the first timer; and
a seventh data group, where the seventh data group is some or all data groups associated with the sixth data group.

In a first application scenario of this embodiment of this application, the first timer corresponds to one data packet, or associated data packets in a same data group share first target information of one first timer, or associated data packets in different data groups share first target information of one first timer.

Optionally, in the first application scenario, start time of the first timer is determined based on at least one of the following:
generation time of a first target data packet;
time at which a first target data packet submitted by an upper layer is received;
time of initial transmission of the first target data packet;
transmission start time of the first target data packet;
start time of a timer corresponding to the second data packet; and
start time of a timer corresponding to a first target data group, where the first target data group is the data group in which the second data packet is located, or is a data group associated with the first data packet.

The upper layer includes at least one of the following:
an application layer;
an Internet protocol IP layer;
a radio resource control (Radio Resource Control, RRC) layer;
a service data adaptation protocol (Service Data Adaptation Protocol, SDAP) layer;
a packet data convergence protocol (Packet Data Convergence Protocol, PDCP) layer;
a radio link control (Radio Link Control, RLC) layer;
a medium access control (Medium Access Control, MAC) layer; and
a physical layer.

The first target data packet includes at least one of the following:
an anchor data packet;
the first data packet;
the second data packet;
the first one of data packets in the first data group;
an anchor data packet in the first data group;
the last data packet in the first data group; and
a predetermined data packet in the first data group, where the predetermined data packet is a data packet other than a first preset data packet, and the first preset data packet includes at least one of the first data packet, the first one of data packets, or the last data packet.

It should be noted that the predetermined data packet in the first data group may be any data packet other than the first preset data packet or a specific data packet.

In this embodiment of this application, a timer corresponding to the anchor data packet (Anchor) is used to control all data packets or some data packets in a corresponding data group. The first timer (discard timer) is started only when the anchor data packet is transferred to a protocol data unit (Protocol Data Unit, PDU). In other words, the discard timer is not triggered to be started when any other data packet in a data group arrives at the PDU, and the discard timer is triggered to be started only when the anchor data packet is transferred to the PDU. For example, in a slice based (slice based) scenario, one frame (frame) corresponds to eight slices (slice), and the eight slices include one I slice and seven P slices. The I slice is the most important, and whether transmission of the seven P slices is correct or whether to discard the seven P slices is not important. Therefore, whether to start the discard timer is determined based on whether the I slice arrives at the PDU. Herein, the I slice is an anchor data packet.

Optionally, a stopping condition of the first timer includes at least one of the following:
a second timer is enabled, where the second timer is a timer used to control discarding of the first data packet or the second data packet;
the second data packet is generated or initially transmitted;
a second data packet submitted by an upper layer is received; and
the first data packet fails to be transmitted.

Optionally, an expiration moment of the first timer is determined based on at least one of the following:
timer duration configured by a network side;
an expiration moment of the second target data packet;
a moment at which the second target data packet is successfully transmitted or processed;
a moment at which the second target data packet is submitted to a lower layer or an upper layer;
an expiration moment of a timer corresponding to the second data packet (corresponding to a case in which associated data packets share a timer); and
an expiration moment of a timer corresponding to a second target data group, where the second target data group is a data group in which the second data packet is located, or is a data group associated with the first data packet.

The second target data packet includes at least one of the following:
an anchor data packet;
the first data packet;
the second data packet;
the last data packet in the first data group;
an anchor data packet in the first data group;
the first one of data packets in the first data group; and
a predetermined data packet in the first data group, where the predetermined data packet is a data packet other than a first preset data packet, and the first preset data packet includes at least one of the first data packet, the first one of data packets, or the last data packet.

It should be noted that the predetermined data packet in the first data group may be any data packet other than the first preset data packet or a specific data packet.

In a second application scenario of this embodiment of this application, the first timer corresponds to one data group or all data packets in a data group, or associated data group shares first target information of one first timer. It should be noted that the associated data groups may be data groups of a same type, or may be data groups of different types.

Optionally, start time of the first timer is determined based on at least one of the following:
generation time of a third target data group;
generation time of a third target data packet;
time at which a third target data packet submitted by an upper layer is received;
time at which a third target data group submitted by the upper layer is received;
time of initial transmission of the third target data packet;
time of initialization transmission of the third target data group;
transmission start time of the third target data packet;
transmission start time of the third target data group;
start time of a timer corresponding to a first target data group, where the first target data group is a data group in which the second data packet is located, or is a data group associated with the first data group; and
start time of a timer corresponding to the third target data packet (corresponding to a case in which a data group and associated data packets share a timer).

The upper layer includes at least one of the following:
an application layer;
an Internet protocol IP layer;
a radio resource control (Radio Resource Control, RRC) layer;
a service data adaptation protocol (Service Data Adaptation Protocol, SDAP) layer;
a packet data convergence protocol (Packet Data Convergence Protocol, PDCP) layer;
a radio link control (Radio Link Control, RLC) layer;
a medium access control (Medium Access Control, MAC) layer; and
a physical layer.

The third target data packet includes at least one of the following:
an anchor data packet;
the first data packet;
the second data packet;
the first one of data packets in the first data group;
an anchor data packet in the first data group;
the last data packet in the first data group; and
a predetermined data packet in the first data group, where the predetermined data packet is a data packet other than a first preset data packet, and the first preset data packet includes at least one of the first data packet, the first one of data packets, or the last data packet.

It should be noted that the predetermined data packet in the first data group may be any data packet other than the first preset data packet or a specific data packet.

The anchor data packet has been described in the foregoing application scenario, and details are not described herein again.

The third target data group includes at least one of the following:
the first data group;
the second data group; and
the third data group.

Optionally, a stopping condition of the first timer includes at least one of the following:
a third timer is enabled, where the third timer is configured to control discarding of at least one data packet in the first data group or is configured to control discarding of at least one data packet in a first target data group, and the first target data group is a data group in which the second data packet is located or is a data group associated with the first data group;
a fourth timer is enabled, where the fourth timer is configured to control discarding of the first data group or is configured to control discarding of the first target data group;
the first target data group is generated or initially transmitted;
a data packet in the first target data group is generated or initially transmitted;
at least one data packet in a first target data group submitted by an upper layer is received;
the first target data group submitted by the upper layer is received;
at least one data packet in the first data group fails to be transmitted; and
the first data group fails to be transmitted.

Optionally, an expiration moment of the first timer is determined based on at least one of the following:
timer duration configured by a network side;
an expiration moment of a fourth target data packet;
an expiration moment of a data group in which the fourth target data packet is located;
an expiration moment of a fourth target data group;
a moment at which the fourth target data packet is successfully transmitted or processed;
a moment at which the data group in which the fourth target data packet is located is successfully transmitted or processed;
a moment at which the fourth target data group is successfully transmitted or processed;
a moment at which the fourth target data packet is submitted to a lower layer or an upper layer;
a moment at which the data group in which the fourth target data packet is located is submitted to a lower layer or an upper layer;
a moment at which the fourth target data group is submitted to a lower layer or an upper layer;
an expiration moment of a timer corresponding to the data group in which the second data packet is located (corresponding to a case in which associated data groups share a timer); and
an expiration moment of a timer corresponding to the second data packet (corresponding to a case in which a data group and associated data packets share a timer).

Optionally, the fourth target data packet includes at least one of the following:
an anchor data packet;
the first data packet;
the second data packet;
the first one of data packets in the first data group;
an anchor data packet in the first data group;
the last data packet in the first data group; and
a predetermined data packet in the first data group, where the predetermined data packet is a data packet other than a first preset data packet, and the first preset data packet includes at least one of the first data packet, the first one of data packets, or the last data packet.

The fourth target data group includes at least one of the following:
the first data group;
the second data group; and
the third data group.

The first target information in the first application scenario and the second application scenario includes at least one of the following:
start time;
end or expiration time; and
timer duration.

Optionally, in this embodiment of this application, the first one of data packets and/or the last data packet in a same data group meet any one of the following:
configured by a network device;
indicated by an upper layer; and
determined based on second target information.

Optionally, the second target information is configured by a network device or indicated by an upper layer.

Optionally, the second target information includes:
boundary information corresponding to a data group.

Optionally, the upper layer includes at least one of the following:
an application layer;
an Internet protocol IP layer;
a radio resource control (Radio Resource Control, RRC) layer;
a service data adaptation protocol (Service Data Adaptation Protocol, SDAP) layer;
a packet data convergence protocol (Packet Data Convergence Protocol, PDCP) layer;
a radio link control (Radio Link Control, RLC) layer; and
a medium access control (Medium Access Control, MAC) layer.

Optionally, the network device includes at least one of the following:
a base station device;
a core network device, such as an access and mobility management function (Access and Mobility Management Function, AMF), an application function (Application function, AF), and a user plane function (User Plane Function, UPF);
a server device; and
a data source device.

In addition, in a case that data packets in different data groups share one first timer, the data group in which the second data packet is located may be the first data group, and in a case that different data groups share one timer or each data group corresponds to one timer, the data group in which the second data packet is located may also be the first data group, and the first data group, the second data group, and the third data group may be data groups of a same type, or may be data groups of different types.

The data packet in this embodiment of this application is at least one of the following:
a PDCP SDU;
a PDCP PDU;
an RLC SDU;
an RLC PDU;
a MAC SDU;
a MAC PDU;
a physical layer (PHY) data packet, such as a transmission block;
an RRC layer data packet, such as an RRC message (message);
an SDAP layer PDU;
an SDAP layer SDU;
an IP data packet;
a data packet corresponding to a PDU session (session);
a data packet corresponding to a QoS flow; and
a data packet corresponding to a radio bearer (Radio Bearer, RB).

The data group includes at least one of the following:
a preset quantity of combinations or sets of the foregoing data packets;
an upper-layer data packet, where the upper layer includes an application layer, an Internet Protocol (Internet Protocol, IP) layer, an RRC layer, an SDAP layer, a PDCP layer, an RLC layer, and a MAC layer;
a data packet corresponding to a quality of service (Quality of Service, QoS) flow (flow);
an I frame, an IDR frame, or a P frame in an XR or CG service;
an Fov frame or a non-Fov frame in the XR or CG service;
a voice data packet or a video image data packet in the XR or CG service;
data packets of different priorities defined in the XR or CG service; and
a data packet corresponding to a base layer or an enhancement layer in the XR or CG service; where
types of different data groups are the same or different.

According to the data processing method in this embodiment of this application, after a data packet is discarded, another data packet or another associated data packet in data group may not be successfully transmitted or demodulated. Therefore, the data packet may be discarded in advance to save system resources, and transmission efficiency and a delay of another data packet are ensured.

The data processing method provided in the embodiments of this application may be performed by a data processing apparatus, or a control module that is in the data processing apparatus and that is configured to perform the data processing method. In the embodiments of this application, that the data processing apparatus performs the data processing method is used as an example to describe the data processing apparatus provided in the embodiments of this application.

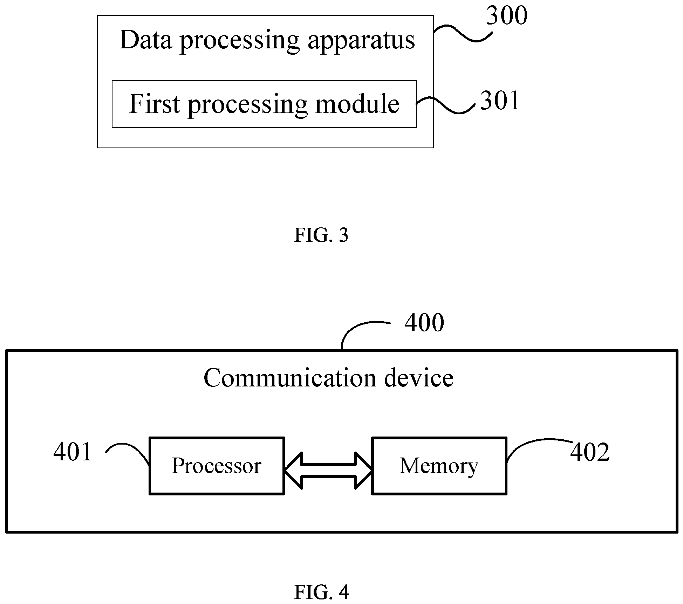

As shown in FIG. 3, an embodiment of this application provides a data processing apparatus 300, including:
a first processing module 301, configured to: in a case that a first timer expires, discard at least one of the following: a first data packet, a first data group, a second data packet, or a data group in which the second data packet is located;
where
the second data packet includes at least one of the following:
   at least one data packet associated with the first data packet or the first data group;
   at least one data packet in a second data group, where the second data group is associated with the first data group or the first data packet;
   at least one data packet in a third data group, where the third data group is a data group in which a third data packet is located, and the third data packet is a data packet associated with the first data packet or the first data group;
   a data packet associated with the first timer; and
   at least one data packet in a data group associated with the first timer; where
   the first timer is a timer associated with at least one of the first data packet, the first data group, the second data packet, or the data group in which the second data packet is located.

Optionally, the apparatus in this embodiment of this application further includes a determining module, configured to determine whether the first timer expires.

Optionally, the data packet associated with the first timer includes at least one of the following:
a fourth data packet, where the fourth data packet is some or all data packets corresponding to the first timer;
a fifth data packet, where the fifth data packet is some or all data packets associated with the fourth data packet;
a sixth data packet, where the sixth data packet is at least one data packet in a fourth data group, and the fourth data group is at least one data group corresponding to the timer; and
a seventh data packet, where the seventh data packet is at least one data packet in a fifth data group, and the fifth data group is a data group associated with the fourth data group.

Optionally, the data group associated with the first timer includes at least one of the following:
a sixth data group, where the sixth data group is all or some data groups corresponding to the first timer; and
a seventh data group, where the seventh data group is some or all data groups associated with the sixth data group.

Optionally, the first timer corresponds to one data packet, or associated data packets in a same data group share first target information of one first timer, or associated data packets in different data groups share first target information of one first timer.

Optionally, start time of the first timer is determined based on at least one of the following:
generation time of a first target data packet;
time at which a first target data packet submitted by an upper layer is received;
time of initial transmission of the first target data packet;
transmission start time of the first target data packet;
start time of a timer corresponding to the second data packet; and
start time of a timer corresponding to a first target data group, where the first target data group is the data group in which the second data packet is located, or is a data group associated with the first data packet.

The first target data packet includes at least one of the following:
an anchor data packet;
the first data packet;
the second data packet;
the first one of data packets in the first data group;
an anchor data packet in the first data group;
the last data packet in the first data group;
a predetermined data packet in the first data group, where the predetermined data packet is a data packet other than a first preset data packet, and the first preset data packet includes at least one of the first data packet, the first one of data packets, or the last data packet.

Optionally, a stopping condition of the first timer includes at least one of the following:
a second timer is enabled, where the second timer is a timer used to control discarding of the first data packet or the second data packet;
the second data packet is generated or initially transmitted;
a second data packet submitted by an upper layer is received; and
the first data packet fails to be transmitted.

Optionally, an expiration moment of the first timer is determined based on at least one of the following:
timer duration configured by a network side;
an expiration moment of the second target data packet;
a moment at which the second target data packet is successfully transmitted or processed;
a moment at which the second target data packet is submitted to a lower layer or an upper layer;
an expiration moment of a timer corresponding to the second data packet; and
an expiration moment of a timer corresponding to a second target data group, where the second target data group is a data group in which the second data packet is located, or is a data group associated with the first data packet.

The second target data packet includes at least one of the following:
an anchor data packet;
the first data packet;
the second data packet;
the last data packet in the first data group;
an anchor data packet in the first data group;
the first one of data packets in the first data group; and
a predetermined data packet in the first data group, where the predetermined data packet is a data packet other than a first preset data packet, and the first preset data packet includes at least one of the first data packet, the first one of data packets, or the last data packet.

Optionally, the first timer corresponds to one data group or all data packets in one data group, or associated data groups share first target information of one first timer.

Optionally, start time of the first timer is determined based on at least one of the following:
generation time of a third target data group;
generation time of a third target data packet;
time at which a third target data packet submitted by an upper layer is received;
time at which a third target data group submitted by the upper layer is received;
time of initial transmission of the third target data packet;
time of initialization transmission of the third target data group;
transmission start time of the third target data packet;
transmission start time of the third target data group;
start time of a timer corresponding to a first target data group, where the first target data group is a data group in which the second data packet is located, or is a data group associated with the first data group; and
start time of a timer corresponding to the third target data packet.

The third target data packet includes at least one of the following:
an anchor data packet;
the first data packet;
the second data packet;
the first one of data packets in the first data group;
an anchor data packet in the first data group;
the last data packet in the first data group; and
a predetermined data packet in the first data group, where the predetermined data packet is a data packet other than a first preset data packet, and the first preset data packet includes at least one of the first data packet, the first one of data packets, or the last data packet.

The third target data group includes at least one of the following:
the first data group;
the second data group; and
the third data group.

Optionally, a stopping condition of the first timer includes at least one of the following:
a third timer is enabled, where the third timer is configured to control discarding of at least one data packet in the first data group or is configured to control discarding of at least one data packet in a first target data group, and the first target data group is a data group in which the second data packet is located or is a data group associated with the first data group;
a fourth timer is enabled, where the fourth timer is configured to control discarding of the first data group or is configured to control discarding of the first target data group;
the first target data group is generated or initially transmitted;
a data packet in the first target data group is generated or initially transmitted;
at least one data packet in a first target data group submitted by an upper layer is received;
the first target data group submitted by the upper layer is received;
at least one data packet in the first data group fails to be transmitted; and
the first data group fails to be transmitted.

Optionally, an expiration moment of the first timer is determined based on at least one of the following:
timer duration configured by a network side;
an expiration moment of a fourth target data packet;
an expiration moment of a data group in which the fourth target data packet is located;
an expiration moment of a fourth target data group;
a moment at which the fourth target data packet is successfully transmitted or processed;
a moment at which the data group in which the fourth target data packet is located is successfully transmitted or processed;
a moment at which the fourth target data group is successfully transmitted or processed;
a moment at which the fourth target data packet is submitted to a lower layer or an upper layer;
a moment at which the data group in which the fourth target data packet is located is submitted to a lower layer or an upper layer;
a moment at which the fourth target data group is submitted to a lower layer or an upper layer;
an expiration moment of a timer corresponding to the data group in which the second data packet is located;
an expiration moment of a timer corresponding to the second data packet.

Optionally, the fourth target data packet includes at least one of the following:
an anchor data packet;
the first data packet;
the second data packet;
the first one of data packets in the first data group;
an anchor data packet in the first data group;
the last data packet in the first data group; and
a predetermined data packet in the first data group, where the predetermined data packet is a data packet other than a first preset data packet, and the first preset data packet includes at least one of the first data packet, the first one of data packets, or the last data packet.

The fourth target data group includes at least one of the following:
the first data group;
the second data group; and
the third data group.

Optionally, the first target information includes at least one of the following:
start time;
end or expiration time; and
timer duration.

Optionally, the first one of data packets and/or the last data packet in a same data group meet any one of the following:
configured by a network device;
indicated by an upper layer; and
determined based on second target information.

Optionally, the second target information is configured by a network device or indicated by an upper layer.

Optionally, the second target information includes:
boundary information corresponding to a data group.

Optionally, the upper layer includes at least one of the following:
an application layer;
an Internet protocol IP layer;
a radio resource control RRC layer;
a service data adaptation protocol SDAP layer;
a packet data convergence protocol PDCP layer;
a radio link control RLC layer; and
a medium access control MAC layer.

Optionally, the network device includes at least one of the following:
a base station device;
a core network device;
a server device; and
a data source device.

According to the apparatus in this embodiment of this application, in a case that a first timer expires, a terminal discards at least one of the following: a first data packet, a first data group, a second data packet, or a data group in which the second data packet is located. The first timer is a timer associated with at least one of the first data packet, the first data group, the second data packet, or the data group in which the second data packet is located. In this way, in a case that the first timer expires, an associated data packet or data group is discarded, so that transmission of invalid data can be reduced, and resource utilization of a system can be improved, or a transmission delay of a data packet can be reduced.

The data processing apparatus in the embodiments of this application may be an apparatus or an electronic device with an operating system, or may be a component, an integrated circuit, or a chip in a terminal. The apparatus or the electronic device may be a mobile terminal, or a non-mobile terminal. For example, the mobile device may include but is not limited to the types of the terminal listed above, and the non-mobile terminal may be a server, a network attached storage (Network Attached Storage, NAS), a personal computer (Personal Computer, PC), a television (television, TV), an automated teller machine, or a self-service machine. This is not specifically limited in the embodiments of this application.

The apparatus provided in the embodiments of this application can implement the processes implemented in the method embodiment of FIG. 2 and achieve a same technical effect. To avoid repetition, details are not described herein again.

Optionally, as shown in FIG. 4, an embodiment of this application further provides a communication device 400, including a processor 401, a memory 402, and a program or an instruction that is stored in the memory 402 and that can be run on the processor 401. For example, when the communication device 400 is a terminal, the program or the instruction is executed by the processor 401 to implement processes of the embodiment of the foregoing data processing method applied to a transmit terminal, and a same technical effect can be achieved. To avoid repetition, details are not described herein again.

An embodiment of this application further provides a terminal, including a processor and a communication interface. The processor is configured to: in a case that a first timer expires, discard at least one of the following: a first data packet, a first data group, a second data packet, or a data group in which the second data packet is located;
where
the second data packet includes at least one of the following:
at least one data packet associated with the first data packet or the first data group;
at least one data packet in a second data group, where the second data group is associated with the first data group or the first data packet;
at least one data packet in a third data group, where the third data group is a data group in which a third data packet is located, and the third data packet is a data packet associated with the first data packet or the first data group;
a data packet associated with the first timer; and
at least one data packet in a data group associated with the first timer; where
the first timer is a timer associated with at least one of the first data packet, the first data group, the second data packet, or the data group in which the second data packet is located.

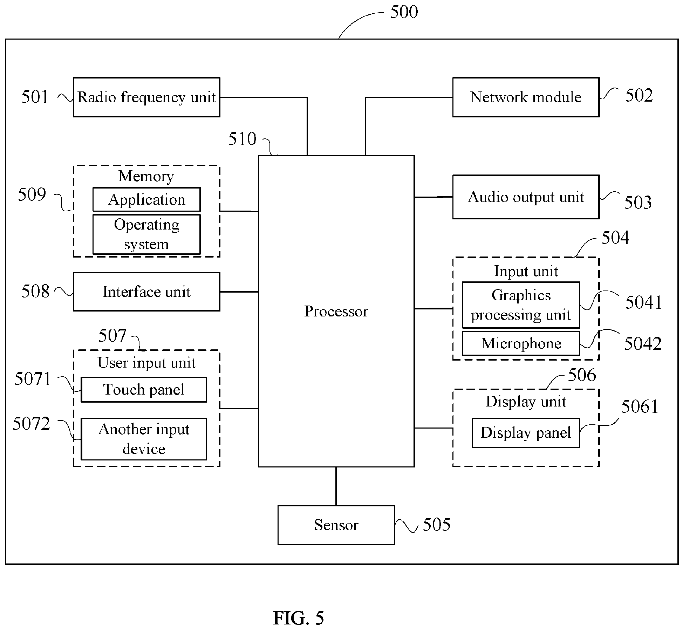

Specifically, FIG. 5 is a schematic diagram of a hardware structure of a terminal according to an embodiment of this application. A terminal 500 includes but is not limited to at least some components in the following: a radio frequency unit 501, a network module 502, an audio output unit 503, an input unit 504, a sensor 505, a display unit 506, a user input unit 507, an interface unit 508, a memory 509, a processor 510, and the like.

A person skilled in the art can understand that the terminal 500 may further include a power supply (such as a battery) that supplies power to each component. The power supply may be logically connected to the processor 510 by using a power supply management system, to implement functions such as charging and discharging management, and power consumption management by using the power supply management system. The terminal structure shown in FIG. 5 constitutes no limitation on the terminal, and the terminal may include more or fewer components than those shown in the figure, or combine some components, or have different component arrangements. Details are not described herein.

It should be understood that, in this embodiment of this application, the input unit 504 may include a graphics processing unit (Graphics Processing Unit, GPU) 5041 and a microphone 5042, and the graphics processing unit 5041 processes image data of a still picture or a video obtained by an image capture apparatus (such as a camera) in a video capture mode or an image capture mode. The display unit 506 may include a display panel 5061. The display panel 5061 may be configured in a form such as a liquid crystal display or an organic light-emitting diode. The user input unit 507 includes a touch panel 5071 and another input device 5072. The touch panel 5071 is also referred to as a touchscreen. The touch panel 5071 may include two parts: a touch detection apparatus and a touch controller. The another input device 5072 may include but is not limited to a physical keyboard, a functional button (such as a volume control button or a power on/off button), a trackball, a mouse, and a joystick. Details are not described herein.

In this embodiment of this application, the radio frequency unit 501 receives downlink data from a network side device and then sends the downlink data to the processor 510 for processing; and sends uplink data to the network side device. Usually, the radio frequency unit 501 includes but is not limited to an antenna, at least one amplifier, a transceiver, a coupler, a low noise amplifier, a duplexer, and the like.

The memory 509 may be configured to store a software program or an instruction and various data. The memory 509 may mainly include a program or instruction storage area and a data storage area. The program or instruction storage area may store an operating system, an application or an instruction required by at least one function (for example, a sound playing function or an image playing function), and the like. In addition, the memory 509 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 510 may include one or more processing units. Optionally, an application processor and a modem processor may be integrated into the processor 510. The application processor mainly processes an operating system, a user interface, an application, an instruction, or the like. The modem processor mainly processes wireless communication, for example, a baseband processor. It may be understood that, alternatively, the modem processor may not be integrated into the processor 510.

The processor 510 is configured to: in a case that a first timer expires, discard at least one of the following: a first data packet, a first data group, a second data packet, or a data group in which the second data packet is located;
where
the second data packet includes at least one of the following:
at least one data packet associated with the first data packet or the first data group;
at least one data packet in a second data group, where the second data group is associated with the first data group or the first data packet;
at least one data packet in a third data group, where the third data group is a data group in which a third data packet is located, and the third data packet is a data packet associated with the first data packet or the first data group;
a data packet associated with the first timer; and
at least one data packet in a data group associated with the first timer; where
the first timer is a timer associated with at least one of the first data packet, the first data group, the second data packet, or the data group in which the second data packet is located.

Optionally, the first timer corresponds to one data packet, or the data packet associated with the first timer includes at least one of the following:
a fourth data packet, where the fourth data packet is some or all data packets corresponding to the first timer;
a fifth data packet, where the fifth data packet is some or all data packets associated with the fourth data packet;
a sixth data packet, where the sixth data packet is at least one data packet in a fourth data group, and the fourth data group is at least one data group corresponding to the timer; and
a seventh data packet, where the seventh data packet is at least one data packet in a fifth data group, and the fifth data group is a data group associated with the fourth data group.

Optionally, the data group associated with the first timer includes at least one of the following:
a sixth data group, where the sixth data group is all or some data groups corresponding to the first timer; and
a seventh data group, where the seventh data group is some or all data groups associated with the sixth data group.

Optionally, associated data packets in a same data group share first target information of one first timer, or associated data packets in different data groups share first target information of one first timer.

Optionally, start time of the first timer is determined based on at least one of the following:
generation time of a first target data packet;
time at which a first target data packet submitted by an upper layer is received;
time of initial transmission of the first target data packet;
transmission start time of the first target data packet;
start time of a timer corresponding to the second data packet; and
start time of a timer corresponding to a first target data group, where the first target data group is the data group in which the second data packet is located, or is a data group associated with the first data packet; where
the first target data packet includes at least one of the following:
   an anchor data packet;
   the first data packet;
   the second data packet;
   the first one of data packets in the first data group;
   an anchor data packet in the first data group;
   the last data packet in the first data group; and
   a predetermined data packet in the first data group, where the predetermined data packet is a data packet other than a first preset data packet, and the first preset data packet includes at least one of the first data packet, the first one of data packets, or the last data packet.

Optionally, a stopping condition of the first timer includes at least one of the following:
a second timer is enabled, where the second timer is a timer used to control discarding of the first data packet or the second data packet;
the second data packet is generated or initially transmitted;
a second data packet submitted by an upper layer is received; and
the first data packet fails to be transmitted.

Optionally, an expiration moment of the first timer is determined based on at least one of the following:
timer duration configured by a network side;
an expiration moment of the second target data packet;
a moment at which the second target data packet is successfully transmitted or processed;
a moment at which the second target data packet is submitted to a lower layer or an upper layer;
an expiration moment of a timer corresponding to the second data packet; and
an expiration moment of a timer corresponding to a second target data group, where the second target data group is a data group in which the second data packet is located, or is a data group associated with the first data packet; where
the second target data packet includes at least one of the following:
   an anchor data packet;
   the first data packet;
   the second data packet;
   the last data packet in the first data group;
   an anchor data packet in the first data group;
   the first one of data packets in the first data group; and
   a predetermined data packet in the first data group, where the predetermined data packet is a data packet other than a first preset data packet, and the first preset data packet includes at least one of the first data packet, the first one of data packets, or the last data packet.

Optionally, the first timer corresponds to one data group or all data packets in a data group, or associated data group shares first target information of one first timer.

Optionally, start time of the first timer is determined based on at least one of the following:
generation time of a third target data group;
generation time of a third target data packet;
time at which a third target data packet submitted by an upper layer is received;
time at which a third target data group submitted by the upper layer is received;
time of initial transmission of the third target data packet;
time of initialization transmission of the third target data group;
transmission start time of the third target data packet;
transmission start time of the third target data group;
start time of a timer corresponding to a first target data group, where the first target data group is a data group in which the second data packet is located, or is a data group associated with the first data group; and
start time of a timer corresponding to the third target data packet; where
the third target data packet includes at least one of the following:
   an anchor data packet;
   the first data packet;
   the second data packet;
   the first one of data packets in the first data group;
   an anchor data packet in the first data group;
   the last data packet in the first data group; and
   a predetermined data packet in the first data group, where the predetermined data packet is a data packet other than a first preset data packet, and the first preset data packet includes at least one of the first data packet, the first one of data packets, or the last data packet; and
   the third target data group includes at least one of the following:
      the first data group;
      the second data group; and
      the third data group.

Optionally, a stopping condition of the first timer includes at least one of the following:
a third timer is enabled, where the third timer is configured to control discarding of at least one data packet in the first data group or is configured to control discarding of at least one data packet in a first target data group, and the first target data group is a data group in which the second data packet is located or is a data group associated with the first data group;
a fourth timer is enabled, where the fourth timer is configured to control discarding of the first data group or is configured to control discarding of the first target data group;
the first target data group is generated or initially transmitted;
a data packet in the first target data group is generated or initially transmitted;
at least one data packet in a first target data group submitted by an upper layer is received;
the first target data group submitted by the upper layer is received;
at least one data packet in the first data group fails to be transmitted; and
the first data group fails to be transmitted.

Optionally, an expiration moment of the first timer is determined based on at least one of the following:
timer duration configured by a network side;
an expiration moment of a fourth target data packet;
an expiration moment of a data group in which the fourth target data packet is located;
an expiration moment of a fourth target data group;
a moment at which the fourth target data packet is successfully transmitted or processed;
a moment at which the data group in which the fourth target data packet is located is successfully transmitted or processed;
a moment at which the fourth target data group is successfully transmitted or processed;
a moment at which the fourth target data packet is submitted to a lower layer or an upper layer;
a moment at which the data group in which the fourth target data packet is located is submitted to a lower layer or an upper layer;
a moment at which the fourth target data group is submitted to a lower layer or an upper layer;
an expiration moment of a timer corresponding to the data group in which the second data packet is located; and
an expiration moment of a timer corresponding to the second data packet; where
the fourth target data packet includes at least one of the following:
   an anchor data packet;
   the first data packet;
   the second data packet;
   the first one of data packets in the first data group;
   an anchor data packet in the first data group;
   the last data packet in the first data group; and
   a predetermined data packet in the first data group, where the predetermined data packet is a data packet other than a first preset data packet, and the first preset data packet includes at least one of the first data packet, the first one of data packets, or the last data packet; and
   the fourth target data group includes at least one of the following:
      the first data group;
      the second data group; and
      the third data group.

Optionally, the first target information includes at least one of the following:
start time;
end or expiration time; and
timer duration.

Optionally, the first one of data packets and/or the last data packet in a same data group meet any one of the following:
configured by a network device;
indicated by an upper layer; and
determined based on second target information.

Optionally, the second target information is configured by a network device or indicated by an upper layer.

Optionally, the second target information includes boundary information corresponding to a data group.

Optionally, the upper layer includes at least one of the following:
an application layer;
an Internet protocol IP layer;
a radio resource control RRC layer;
a service data adaptation protocol SDAP layer;
a packet data convergence protocol PDCP layer;
a radio link control RLC layer; and
a medium access control MAC layer.

Optionally, the network device includes at least one of the following:
a base station device;
a core network device;
a server device; and
a data source device.

In this embodiment of this application, in a case that a first timer expires, a terminal discards at least one of the following: a first data packet, a first data group, a second data packet, or a data group in which the second data packet is located. The first timer is a timer associated with at least one of the first data packet, the first data group, the second data packet, or the data group in which the second data packet is located. In this way, in a case that the first timer expires, an associated data packet or data group is discarded, so that transmission of invalid data can be reduced, and resource utilization of a system can be improved, or a transmission delay of a data packet can be reduced.

An embodiment of this application further provides a readable storage medium. The readable storage medium may be volatile or non-volatile. The readable storage medium stores a program or an instruction, and the program or the instruction is executed by a processor to implement the processes of the embodiment of the foregoing data processing method, and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of the present application further provides a chip, the chip includes a processor and a communication interface, the communication interface is coupled to the processor, and the processor is configured to run a program or an instruction to implement the processes of the embodiment of the foregoing data processing method, and a same technical effect can be achieved. To avoid repetition, details are not described herein again.

An embodiment of this application further provides a computer program/program product. The computer program/program product is stored in a non-volatile storage medium, and the computer program/program product is executed by at least one processor to implement the steps of the foregoing data processing method.

It should be understood that the chip mentioned in this embodiment of this application may also be referred to as a system-level chip, a system chip, a chip system, or a system on chip.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. An element limited by "includes a ..." does not, without more constraints, preclude the presence of additional identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be a mobile phone, a computer, a server, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A data processing method, comprising:
in a case that a first timer expires, discarding, by a terminal, at least one of the following: a first data packet, a first data group, a second data packet, or a data group in which the second data packet is located; wherein
the second data packet comprises at least one of the following:
at least one data packet associated with the first data packet or the first data group;
at least one data packet in a second data group, wherein the second data group is associated with the first data group or the first data packet;
at least one data packet in a third data group, wherein the third data group is a data group in which a third data packet is located, and the third data packet is a data packet associated with the first data packet or the first data group;
a data packet associated with the first timer; and
at least one data packet in a data group associated with the first timer; wherein
the first timer is a timer associated with at least one of the first data packet, the first data group, the second data packet, or the data group in which the second data packet is located.

2. The method according to claim 1, wherein the data packet associated with the first timer comprises at least one of the following:
a fourth data packet, wherein the fourth data packet is some or all data packets corresponding to the first timer;
a fifth data packet, wherein the fifth data packet is some or all data packets associated with the fourth data packet;
a sixth data packet, wherein the sixth data packet is at least one data packet in a fourth data group, and the fourth data group is at least one data group corresponding to the timer; and
a seventh data packet, wherein the seventh data packet is at least one data packet in a fifth data group, and the fifth data group is a data group associated with the fourth data group.

3. The method according to claim 1, wherein the data group associated with the first timer comprises at least one of the following:
a sixth data group, wherein the sixth data group is all or some data groups corresponding to the first timer; and
a seventh data group, wherein the seventh data group is some or all data groups associated with the sixth data group.

4. The method according to claim 1, wherein the first timer corresponds to one data packet, or associated data packets in a same data group share first target information of one first timer, or associated data packets in different data groups share first target information of one first timer.

5. The method according to claim 1 or 4, wherein start time of the first timer is determined based on at least one of the following:
generation time of a first target data packet;
time at which a first target data packet submitted by an upper layer is received;
time of initial transmission of the first target data packet;
transmission start time of the first target data packet;
start time of a timer corresponding to the second data packet; and
start time of a timer corresponding to a first target data group, wherein the first target data group is the data group in which the second data packet is located, or is a data group associated with the first data packet; wherein
the first target data packet comprises at least one of the following:
an anchor data packet;
the first data packet;
the second data packet;
the first one of data packets in the first data group;
an anchor data packet in the first data group;
the last data packet in the first data group; and
a predetermined data packet in the first data group, wherein the predetermined data packet is a data packet other than a first preset data packet, and the first preset data packet comprises at least one of the first data packet, the first one of data packets, or the last data packet.

6. The method according to claim 1 or 4, wherein a stopping condition of the first timer comprises at least one of the following:
a second timer is enabled, wherein the second timer is a timer used to control discarding of the first data packet or the second data packet;
the second data packet is generated or initially transmitted;
a second data packet submitted by an upper layer is received; and
the first data packet fails to be transmitted.

7. The method according to claim 1 or 4, wherein an expiration moment of the first timer is determined based on at least one of the following:
timer duration configured by a network side;
an expiration moment of the second target data packet;
a moment at which the second target data packet is successfully transmitted or processed;
a moment at which the second target data packet is submitted to a lower layer or an upper layer;
an expiration moment of a timer corresponding to the second data packet; and
an expiration moment of a timer corresponding to a second target data group, wherein the second target data group is a data group in which the second data packet is located, or is a data group associated with the first data packet; wherein
the second target data packet comprises at least one of the following:
an anchor data packet;
the first data packet;
the second data packet;
the last data packet in the first data group;
an anchor data packet in the first data group;
the first one of data packets in the first data group; and
a predetermined data packet in the first data group, wherein the predetermined data packet is a data packet other than a first preset data packet, and the first preset data packet comprises at least one of the first data packet, the first one of data packets, or the last data packet.

8. The method according to claim 1, wherein the first timer corresponds to one data group or all data packets in a data group, or associated data group shares first target information of one first timer.

9. The method according to claim 1 or 8, wherein start time of the first timer is determined based on at least one of the following:
generation time of a third target data group;
generation time of a third target data packet;
time at which a third target data packet submitted by an upper layer is received;
time at which a third target data group submitted by the upper layer is received;
time of initial transmission of the third target data packet;
time of initialization transmission of the third target data group;
transmission start time of the third target data packet;
transmission start time of the third target data group;
start time of a timer corresponding to a first target data group, wherein the first target data group is a data group in which the second data packet is located, or is a data group associated with the first data group; and
start time of a timer corresponding to the third target data packet; wherein
the third target data packet comprises at least one of the following:
an anchor data packet;
the first data packet;
the second data packet;
the first one of data packets in the first data group;
an anchor data packet in the first data group;
the last data packet in the first data group; and
a predetermined data packet in the first data group, wherein the predetermined data packet is a data packet other than a first preset data packet, and the first preset data packet comprises at least one of the first data packet, the first one of data packets, or the last data packet; and
the third target data group comprises at least one of the following:
the first data group;
the second data group; and
the third data group.

10. The method according to claim 1 or 8, wherein a stopping condition of the first timer comprises at least one of the following:
a third timer is enabled, wherein the third timer is configured to control discarding of at least one data packet in the first data group or is configured to control discarding of at least one data packet in a first target data group, and the first target data group is a data group in which the second data packet is located or is a data group associated with the first data group;
a fourth timer is enabled, wherein the fourth timer is configured to control discarding of the first data group or is configured to control discarding of the first target data group;
the first target data group is generated or initially transmitted;
a data packet in the first target data group is generated or initially transmitted;
at least one data packet in a first target data group submitted by an upper layer is received;
the first target data group submitted by the upper layer is received;
at least one data packet in the first data group fails to be transmitted; and
the first data group fails to be transmitted.

11. The method according to claim 1 or 8, wherein an expiration moment of the first timer is determined based on at least one of the following:
timer duration configured by a network side;
an expiration moment of a fourth target data packet;
an expiration moment of a data group in which the fourth target data packet is located;
an expiration moment of a fourth target data group;
a moment at which the fourth target data packet is successfully transmitted or processed;
a moment at which the data group in which the fourth target data packet is located is successfully transmitted or processed;
a moment at which the fourth target data group is successfully transmitted or processed;
a moment at which the fourth target data packet is submitted to a lower layer or an upper layer;
a moment at which the data group in which the fourth target data packet is located is submitted to a lower layer or an upper layer;
a moment at which the fourth target data group is submitted to a lower layer or an upper layer;
an expiration moment of a timer corresponding to the data group in which the second data packet is located; and
an expiration moment of a timer corresponding to the second data packet; wherein
the fourth target data group comprises at least one of the following:
the first data group;
the second data group; and
the third data group.

12. The method according to claim 11, wherein the fourth target data packet comprises at least one of the following:
an anchor data packet;
the first data packet;
the second data packet;
the first one of data packets in the first data group;
an anchor data packet in the first data group;
the last data packet in the first data group; and
a predetermined data packet in the first data group, wherein the predetermined data packet is a data packet other than a first preset data packet, and the first preset data packet comprises at least one of the first data packet, the first one of data packets, or the last data packet.

13. The method according to claim 4 or 8, wherein the first target information comprises at least one of the following:
start time;
end or expiration time; and
timer duration.

14. The method according to claim 1, wherein the first one of data packets and/or the last data packet in a same data group meet any one of the following:
configured by a network device;
indicated by an upper layer; and
determined based on second target information.

15. The method according to claim 14, wherein the second target information comprises boundary information corresponding to a data group.

16. The method according to claim 14, wherein the upper layer comprises at least one of the following:
an application layer;
an Internet protocol IP layer;
a radio resource control RRC layer;
a service data adaptation protocol SDAP layer;
a packet data convergence protocol PDCP layer;
a radio link control RLC layer; and
a medium access control MAC layer.

17. The method according to claim 14, wherein the network device comprises at least one of the following:
a base station device;
a core network device;
a server device; and
a data source device.

18. A data processing apparatus, comprising:
a first processing module, configured to: in a case that a first timer expires, discard at least one of the following: a first data packet, a first data group, a second data packet, or a data group in which the second data packet is located; wherein
the second data packet comprises at least one of the following:
at least one data packet associated with the first data packet or the first data group;
at least one data packet in a second data group, wherein the second data group is associated with the first data group or the first data packet;
at least one data packet in a third data group, wherein the third data group is a data group in which a third data packet is located, and the third data packet is a data packet associated with the first data packet or the first data group;
a data packet associated with the first timer; and
at least one data packet in a data group associated with the first timer; wherein
the first timer is a timer associated with at least one of the first data packet, the first data group, the second data packet, or the data group in which the second data packet is located.

19. The apparatus according to claim 18, wherein the data packet associated with the first timer comprises at least one of the following:
a fourth data packet, wherein the fourth data packet is some or all data packets corresponding to the first timer;
a fifth data packet, wherein the fifth data packet is some or all data packets associated with the fourth data packet;
a sixth data packet, wherein the sixth data packet is at least one data packet in a fourth data group, and the fourth data group is at least one data group corresponding to the timer; and
a seventh data packet, wherein the seventh data packet is at least one data packet in a fifth data group, and the fifth data group is a data group associated with the fourth data group.

20. The apparatus according to claim 18, wherein the data group associated with the first timer comprises at least one of the following:
a sixth data group, wherein the sixth data group is all or some data groups corresponding to the first timer; and
a seventh data group, wherein the seventh data group is some or all data groups associated with the sixth data group.

21. The apparatus according to claim 18, wherein the first timer corresponds to one data packet, or associated data packets in a same data group share first target information of one first timer, or associated data packets in different data groups share first target information of one first timer.

22. The apparatus according to claim 18 or 21, wherein start time of the first timer is determined based on at least one of the following:
generation time of a first target data packet;
time at which a first target data packet submitted by an upper layer is received;
time of initial transmission of the first target data packet;
transmission start time of the first target data packet;
start time of a timer corresponding to the second data packet; and
start time of a timer corresponding to a first target data group, wherein the first target data group is the data group in which the second data packet is located, or is a data group associated with the first data packet; wherein
the first target data packet comprises at least one of the following:
an anchor data packet;
the first data packet;
the second data packet;
the first one of data packets in the first data group;
an anchor data packet in the first data group;
the last data packet in the first data group; and
a predetermined data packet in the first data group, wherein the predetermined data packet is a data packet other than a first preset data packet, and the first preset data packet comprises at least one of the first data packet, the first one of data packets, or the last data packet.

23. The apparatus according to claim 18 or 21, wherein a stopping condition of the first timer comprises at least one of the following:
a second timer is enabled, wherein the second timer is a timer used to control discarding of the first data packet or the second data packet;
the second data packet is generated or initially transmitted;
a second data packet submitted by an upper layer is received; and
the first data packet fails to be transmitted.

24. The apparatus according to claim 18 or 21, wherein an expiration moment of the first timer is determined based on at least one of the following:
timer duration configured by a network side;
an expiration moment of the second target data packet;
a moment at which the second target data packet is successfully transmitted or processed;
a moment at which the second target data packet is submitted to a lower layer or an upper layer;
an expiration moment of a timer corresponding to the second data packet; and
an expiration moment of a timer corresponding to a second target data group, wherein the second target data group is a data group in which the second data packet is located, or is a data group associated with the first data packet; wherein
the second target data packet comprises at least one of the following:
an anchor data packet;
the first data packet;
the second data packet;
the last data packet in the first data group;
an anchor data packet in the first data group;
the first one of data packets in the first data group; and
a predetermined data packet in the first data group, wherein the predetermined data packet is a data packet other than a first preset data packet, and the first preset data packet comprises at least one of the first data packet, the first one of data packets, or the last data packet.

25. The apparatus according to claim 18, wherein the first timer corresponds to one data group or all data packets in a data group, or associated data group shares first target information of one first timer.

26. The apparatus according to claim 18 or 25, wherein start time of the first timer is determined based on at least one of the following:
generation time of a third target data group;
generation time of a third target data packet;
time at which a third target data packet submitted by an upper layer is received;
time at which a third target data group submitted by the upper layer is received;
time of initial transmission of the third target data packet;
time of initialization transmission of the third target data group;
transmission start time of the third target data packet;
transmission start time of the third target data group;
start time of a timer corresponding to a first target data group, wherein the first target data group is a data group in which the second data packet is located, or is a data group associated with the first data group; and
start time of a timer corresponding to the third target data packet; wherein
the third target data packet comprises at least one of the following:
an anchor data packet;
the first data packet;
the second data packet;
the first one of data packets in the first data group;
an anchor data packet in the first data group;
the last data packet in the first data group; and
a predetermined data packet in the first data group, wherein the predetermined data packet is a data packet other than a first preset data packet, and the first preset data packet comprises at least one of the first data packet, the first one of data packets, or the last data packet; and
the third target data group comprises at least one of the following:
the first data group;
the second data group; and
the third data group.

27. The apparatus according to claim 18 or 25, wherein a stopping condition of the first timer comprises at least one of the following:
a third timer is enabled, wherein the third timer is configured to control discarding of at least one data packet in the first data group or is configured to control discarding of at least one data packet in a first target data group, and the first target data group is a data group in which the second data packet is located or is a data group associated with the first data group;
a fourth timer is enabled, wherein the fourth timer is configured to control discarding of the first data group or is configured to control discarding of the first target data group;
the first target data group is generated or initially transmitted;
a data packet in the first target data group is generated or initially transmitted;
at least one data packet in a first target data group submitted by an upper layer is received;
the first target data group submitted by the upper layer is received;
at least one data packet in the first data group fails to be transmitted; and
the first data group fails to be transmitted.

28. A terminal, comprising a processor, a memory, and a program or an instruction that is stored in the memory and that can be run on the processor, and when the program or the instruction is executed by the processor, the steps of the data processing method according to any one of claims 1 to 17 are implemented.

29. A readable storage medium, wherein the readable storage medium stores a program or an instruction, and when the program or the instruction is executed by a processor, the steps of the data processing method according to any one of claims 1 to 17 are implemented.

30. A chip, comprising a processor and a communication interface, wherein the communication interface is coupled to the processor, and the processor is configured to run a program or an instruction, to implement the steps of the data processing method according to any one of claims 1 to 17.

31. A computer program product, wherein the program product is stored in a non-volatile storage medium, and the program product is executed by at least one processor to implement the steps of the data processing method according to any one of claims 1 to 17.
